# EUROPÄISCHE PATENTSCHRIFT

(11) **EP 3 535 822 B1**
(45) Veröffentlichungstag und Bekanntmachung des Hinweises auf die Patenterteilung: **01.04.2020**
(21) Anmeldenummer: 18710311.4
(22) Anmeldetag: 15.02.2018
(51) Int. Cl.: H02B 1/32, H02B 1/30, H02B 1/01, H02B 1/54

(54) **SCHALTSCHRANK MIT EINER MONTAGEPLATTENANORDNUNG**
ELECTRICAL CABINET WITH A MOUNTING PLATE ARRANGEMENT
ARMOIRE ÉLECTRIQUE AVEC PANNEAU DE MONTAGE

(30) Priorität: 21.04.2017 DE 102017108523
(43) Veröffentlichungstag der Anmeldung: 11.09.2019
(73) Patentinhaber: Rittal GmbH & Co. KG, 35745 Herborn (DE)
(72) Erfinder: BOEHME, Siegfried, 06766 Wolfen (DE); HOLIGHAUS, Heiko, 35713 Eschenburg (DE)
(74) Vertreter: Angerhausen, Christoph
(86) Internationale Anmeldenummer: PCT/DE2018/100139
(87) Internationale Veröffentlichungsnummer: WO 2018/192607

(56) Entgegenhaltungen:
- WO-A1-96/28004
- DE-A1- 4 140 072
- DE-C1- 19 737 488
- FR-A1- 2 681 478

## Beschreibung

Die Erfindung geht aus von einer Montageplattenanordnung mit einer Montageplatte, die über mindestens einen Montageplattenhalter am Rahmengestell eines Schaltschranks festgelegt ist, wobei der Montageplattenhalter ein Lagerstück aufweist, das an einer unteren Längskante der Montageplatte anliegt oder festgelegt ist, wobei die Montageplatte mit dem Lagerstück über einen Befestigungswinkel des Montageplattenhalters auf einer Horizontalstrebe des Rahmengestells und/oder eines Zusatzrahmens aufsteht. Eine derartige Montageplattenanordnung ist aus der WO 96/30978 A1 bekannt.

Je nach Bestückung der Montageplatte kann sie mehrere einhundert Kilogramm wiegen, wobei diese Last bei im Innern des Schaltschranks montierter Montageplatte von den Montageplattenhaltern aufgenommen werden muss und diese somit entsprechend hoher Belastung ausgesetzt sind, insbesondere dann, wenn der Schaltschrank nicht völlig still steht, beispielsweise wenn der Schaltschrank bewegt wird, etwa weil er sich auf einem Hochseeschiff befindet. Die aus dem Stand der Technik bekannten Montageplattenhalter sind daher als entsprechend massive Stahlbauteile ausgebildet und folglich aufwendig und damit teuer in der Herstellung, oder aber kompliziert in der Handhabung.

Die FR 2 681 478 A1 offenbart einen Schaltschrank mit einem Rahmengestell und einer Montageplattenanordnung gemäß dem Oberbegriff des Anspruchs 1. Die DE 197 37 488 C1 und die DE 41 40 072 A1 offenbaren weitere Schaltschränke mit Rahmengestell und Montageplattenanordnung.

Es ist daher die Aufgabe der Erfindung, eine Montageplattenanordnung der eingangs beschriebenen Art derart weiterzuentwickeln, dass sie einerseits hohen Belastungen standhält und andererseits sowohl kostengünstig in der Herstellung als auch einfach in der Handhabung ist.

Diese Aufgabe wird durch einen Schaltschrank mit den Merkmalen des Anspruchs 1 gelöst. Die abhängigen Ansprüche betreffen jeweils vorteilhafte Ausführungsformen der Erfindung.

Demgemäß ist zumindest eine Aufstandsseite des Lagerstücks, über die das Lagerstück auf dem Befestigungswinkel aufsteht, ein Dämpfungsglied, oder die Aufstandsseite weist ein solches Dämpfungsglied auf.

Untersuchungen haben gezeigt, dass anstelle massiver und starrer Stahlmontageplattenhalter ein zweiteiliger Montageplattenhalter, mit einem Befestigungswinkel und einem Lagerstück zweckmäßig sein kann, um Schwingungsbelastungen des Halters zu kompensieren. Zur Vereinfachung der Montage sind Ausführungsformen denkbar, bei denen das Lagerstück an der Montageplatte vormontierbar ist, so dass die Montageplatte über das Lagerstück auf den Befestigungswinkel aufgesetzt werden kann. Weist das Lagerstück an seiner Aufstandsseite, über die das Lagerstück auf dem Befestigungswinkel aufgesetzt ist, ein Dämpfungsglied auf, so kann das Dämpfungsglied die bei starren Montageplattenhaltern zur Verwindung und zum Verschleiß des Montageplattenhalters führenden Schwingungen aufnehmen und damit die Stabilität der Montageplattenanordnung erhöhen.

Um die mechanische Kopplung zwischen Aufstandsseite und Montageplatte zu erhöhen und damit die Dämpfungswirkung des Dämpfungsglieds zu verbessern, kann das Lagerstück eine Aufnahme aufweisen, in der die untere Längskante der Montageplatte aufgenommen ist.

Um die Vormontage der Montageplatte in Bezug auf den Befestigungswinkel weiter zu vereinfachen, kann vorgesehen sein, dass das Lagerstück einen Zapfen aufweist, der sich in eine Zapfenaufnahme des Befestigungswinkels erstreckt. Der Zapfen kann in der Zapfenaufnahme schwimmend gelagert sein. Die Zapfenaufnahme kann eine Anlaufschräge aufweisen, um ein Einsetzen des Zapfens in die Zapfenaufnahme im Zuge eines Einschwenkens der Montageplatte aus einer angewinkelten Stellung zur Vertikalen in die Vertikale zu erleichtern. An seinem freien Ende kann der Zapfen konisch zulaufend sein, um den Einsetzvorgang des Zapfens in die Zapfenaufnahme weiter zu fördern.

Das Dämpfungsglied des Lagerstücks kann ein Material aufweisen oder aus einem Material bestehen, das ein Elastizitätsmodul aufweist, das geringer als ein Elastizitätsmodul des Materials des Rahmengestells und geringer als ein Elastizitätsmodul des Materials des Befestigungswinkels ist. Beispielsweise kann das Dämpfungsglied des Lagerstücks aus Kunststoff bestehen und der Befestigungswinkel ein Metallteil, insbesondere ein Stahlteil sein. Der Befestigungswinkel kann beispielsweise ein gekantetes Stahlteil sein. Das Lagerstück einschließlich des Dämpfungsglieds kann ein Kunststoff-Spritzgußformteil sein. Rahmengestelle sind üblicherweise aus gekantetem Stahl gefertigt. Das Lagerstück, zumindest jedoch das Dämpfungselement, kann beispielsweise aus einem thermoplastischem Kunststoff bestehen oder einen solchen aufweisen, z.B. Polyamid.

Erfindungsgemäß weist das Dämpfungsglied eine Stützwand auf, die sich parallel zu einer Gegenstützwand des Befestigungswinkels und senkrecht zu der Aufstandsseite erstreckt. Die Aufnahme kann zu der Gegenstützwand des Befestigungswinkels hin geöffnet sein, so dass bei auf dem Montageplattenhalter montierter Montageplatte die Aufnahme an der der Gegenstützwand des Befestigungswinkels zugewandten Seite von der Gegenstützwand verschlossen ist.

Während die Gegenstützwand als Bestandteil des Befestigungswinkels ebenfalls aus Stahl gefertigt sein kann, kann die Stützwand des Dämpfungsglieds aus einem elastischeren Material ausgebildet sein, beispielsweise aus Kunststoff, so dass die Stützwand des Dämpfungsglieds in Richtung senkrecht zu der Stützwand und der Gegenstützwand dazu eingerichtet ist, Schwingungen aufzunehmen und damit den Montageplattenhalter zu entlasten. Die Stützwand kann aus demselben Material gefertigt sein, wie die Aufstandsseite, insbesondere können sie beiden einteilig ausgebildet sein.

Erfindungsgemäß ist eine Umkantung, insbesondere eine C-Umkantung oder eine U-Umkantung, am Außenumfang der Montageplatte, zwischen der Stützwand und der Gegenstützwand gehalten, wobei die Montageplatte mit ihrer Montageebene für Innenausbaukomponenten an einer ersten von Stützwand und Gegenstützwand anliegt. Dabei liegt die Montageplatte mit einer parallel beabstandet zu der Montageebene angeordneten Profilseite der Umkantung an einer zweiten von Stützwand und Gegenstützwand an. Die Stützwand und die Gegenstützwand können somit eine Formschlussaufnahme für die Umkantung der Montageplatte bilden. Da die Stützwand Bestandteil des Dämpfungsglieds sein kann, ist sie dazu eingerichtet, Schwingungen in Richtung senkrecht zu der Stützwand und der Gegenstützwand aufzunehmen und damit den Montageplattenhalter zu entlasten.

Die Montageplatte kann über die Umkantung, insbesondere über eine parallel beabstandet zu der Montageebene der Montageplatte angeordnete Profilseite der Umkantung an der Gegenstützwand des Befestigungswinkels festgelegt sein, insbesondere verschraubt sein. Dazu kann die Gegenstützwand einen Durchbruch aufweisen, beispielsweise einen Bolzendurchlass und/oder eine Aufnahme für eine Käfigmutter. Damit fluchtend kann die Profilseite der Umkantung einen weiteren Durchbruch aufweisen, über den ein Bolzen zwischen der Profilseite und der Gegenstützwand geführt ist. Um ein Einsetzen eines Befestigungsmittels, beispielsweise eines Bolzens, durch die fluchtenden Durchbrüche in der Profilseite und der Gegenstützwand des Befestigungswinkels von der Vorderseite der Montageplatte, das heißt über die Montageebene der Montageplatte, zu ermöglichen, kann die Montageplatte durch ihre Montageebene einen weiteren Durchbruch aufweisen, der mit den zuvor genannten Durchbrüchen durch die Profilseite und die Gegenstützwand des Befestigungswinkels fluchtet.

Das Rahmengestell kann einen rechteckigen Bodenrahmen aus zwei Breitenstreben und zwei sich dazu senkrecht erstreckenden Tiefenstreben aufweisen, wobei der Bodenrahmen auf einen Zusatzrahmen aufgesetzt ist, der eine horizontale Auflageseite am Innenumfang des Bodenrahmens bereitstellt, und wobei der Befestigungswinkel ein Fußteil aufweist, mit dem der Befestigungswinkel auf der Auflageseite aufsteht. Ein derartiges Rahmengestell mit Zusatzrahmen ist in der DE 10 2015 121 192 A1 beschrieben.

Das Fußteil kann einen Stützabschnitt aufweisen, über den der Befestigungswinkel an einer vertikalen Profilseite am Innenumfang des Bodenrahmens abgestützt ist.

Der Befestigungswinkel kann einen Montageabschnitt aufweisen, mit dem der Befestigungswinkel eine horizontale Befestigungsseite des Rahmengestells übergreift. Ein geeignetes Rahmengestell ist ebenfalls in der DE 10 2015 121 192 A1 beschrieben. Der Befestigungswinkel kann über den Montageabschnitt an dem Rahmengestell festgelegt, insbesondere verschraubt sein.

Der Montageabschnitt kann einen Haken aufweisen, über den der Befestigungswinkel in eine Befestigungsaufnahme einer Systemlochung in einer horizontalen Befestigungsseite eines horizontalen Bodenrahmens des Rahmengestells eingreift.

Der Befestigungswinkel kann eine erste und eine zweite Zapfenaufnahme aufweisen, wobei ein Zapfen des Lagerstücks in der ersten Zapfenaufnahme aufgenommen ist, wenn der Befestigungswinkel an einer Tiefenstrebe eines horizontalen Bodenrahmens des Rahmengestells montiert ist, und wobei der Zapfen des Lagerstücks in der zweiten Zapfenaufnahme aufgenommen ist, wenn der Befestigungswinkel an einer Breitenstrebe eines Bodenrahmens des Rahmengestells montiert ist. Dazu können die Breitenstreben und die Tiefenstreben des Bodenrahmens insbesondere als im Querschnitt senkrecht zur Längsrichtung identische Profile ausgebildet sein.

Eine horizontale und/oder eine vertikale Befestigungsseite einer Tiefenstrebe des Rahmengestells kann eine Systemlochung aus unter einem festen Rastermaß angeordneten Befestigungsaufnahmen aufweisen, wobei eine vertikale Montageebene der Montageplatte in dem Rastermaß angeordnet ist.

Eine Umkantung der Montageplatte kann insbesondere als C-Umkantung oder U-Umkantung ausgebildet sein. Die Umkantung kann an einer senkrecht zu der Montageebene der Montageplatte verlaufenden Seite eine Systemlochreihe aus unter einem festen Rastermaß angeordneten Befestigungsaufnahmen aufweisen. Das Rastermaß der Befestigungsaufnahmen der C-Umkantung kann dem Rastermaß in einem Vertikalprofil des Rahmengestells des Schaltschranks entsprechen. Dabei kann der Montageplattenhalter dazu eingerichtet sein, das Rastermaß der C-Umkantung in dem Rastermaß des Vertikalprofils des Rahmengestells des Schaltschranks auszurichten. Dabei kann mindestens eine Innenausbaukomponente zwischen der Umkantung der Montageplatte und der Vertikalstrebe geführt sein, wobei die Innenausbaukomponente einmal über die Systemlochung der Umkantung mit der Umkantung und einmal über die Systemlochung des Vertikalprofils mit dem Vertikalprofil verbunden ist.

Weitere Einzelheiten der Erfindung werden anhand der nachstehenden Figuren erläutert. Dabei zeigt:
- Figur 1: eine beispielhafte Ausführungsform eines Befestigungswinkels in perspektivischer Darstellung;
- Figur 2: eine beispielhafte Ausführungsform eines Lagerstücks in perspektivischer Darstellung;
- Figur 3: eine weitere perspektivische Darstellung des Lagerstücks gemäß Figur 2;
- Figur 4: eine beispielhafte Montageplattenanordnung gemäß einer Ausführungsform der Erfindung;
- Figur 5: eine Ausführungsform eines über die untere Längskante einer Montageplatte mit der Montageplatte verbundenen Gleitstücks;
- Figur 6: eine weitere Ausführungsform einer beispielhaften Montageplattenanordnung; und
- Figur 7: ein Beispiel eines Montageplattenhalters, nicht Teil der Erfindung.

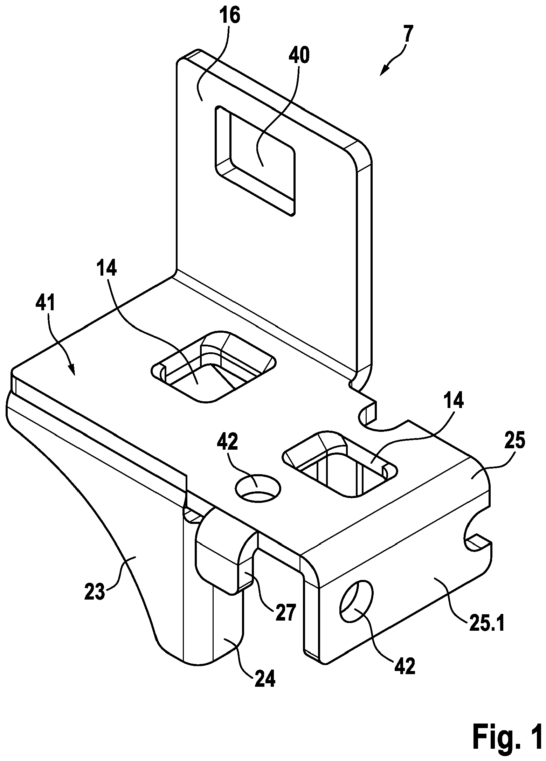

Figur 1 zeigt eine beispielhafte Ausführungsform eines Befestigungswinkels 7. Dieser ist als ein Blechformteil ausgebildet. Insbesondere kann das Blechformteil zweiteilig ausgebildet sein, mit einem unteren Fußteil 23 und einem darauf aufgesetzten Oberteil, welches im Wesentlichen aus der Aufstandsseite 41, der davon abgekanteten Gegenstützwand 16 und dem daran angeformten Montageabschnitt 25 besteht. Wie zu erkennen ist, sind die beiden Bestandteile des Befestigungswinkels 7 im Wesentlichen durch Stanzen und Kanten erhältlich und können miteinander verschweißt sein.

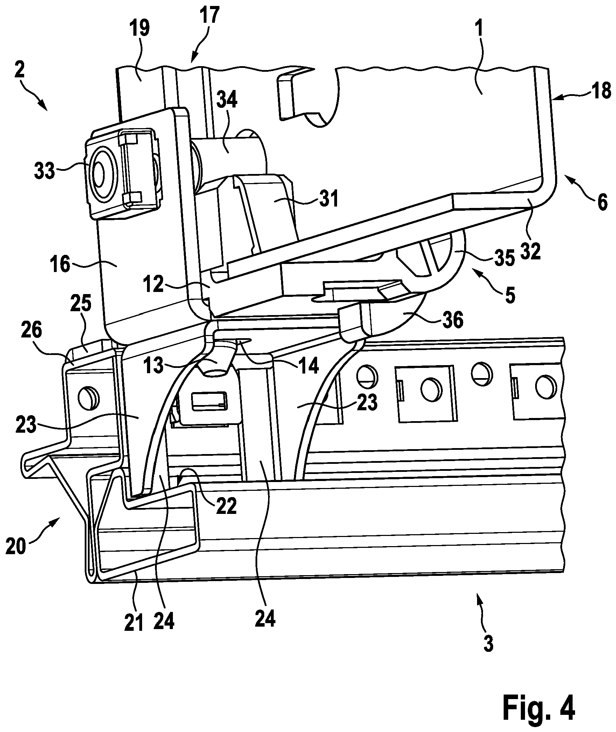

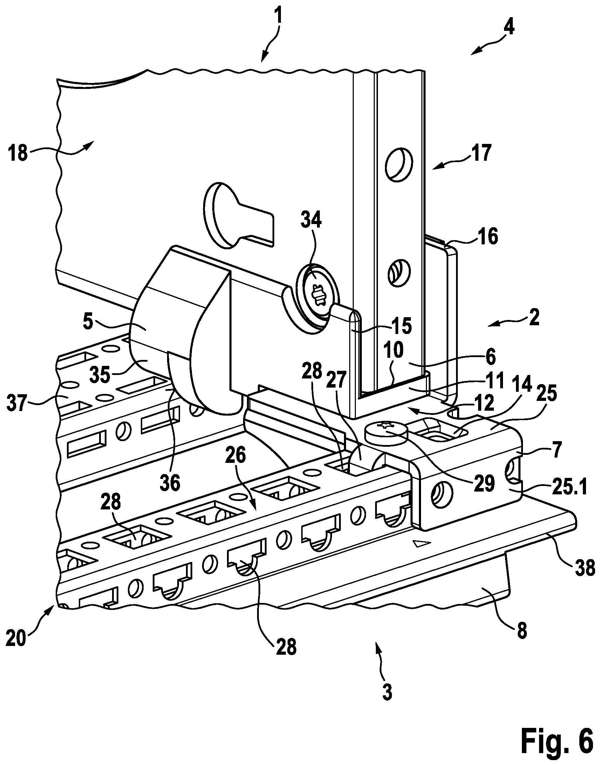

Die von der Aufstandsseite 41 abgekantete Gegenstützwand 16 weist eine Aufnahme 40 für eine Käfigmutter oder dergleichen auf, über welche die Montageplatte (nicht dargestellt) mit dem Befestigungswinkel 7 verschraubt werden kann. Der Montageabschnitt 25 kann so ausgeformt sein, dass bei auf einem Horizontalprofil eines Bodenrahmens eines Schaltschrankrahmengestells, wie es beispielsweise aus in der DE 10 2015 121 192 A1 gezeigt ist, aufgesetztem Befestigungswinkel 7 der Montageabschnitt 25 eine obere horizontale Montageseite des Rahmengestells übergreift, so dass der Montageabschnitt 25 mit seinem vertikalen Abschnitt 25.1 die horizontale Befestigungsseite 26 des Rahmengestells (siehe Figuren 4 und 6) hintergreift und dort an einer ersten senkrechten Profilseite des Profilrahmens anliegt, während das Fußteil 23 mit seinem Stützabschnitt 24 an einer weiteren vertikalen Profilseite des Profilrahmens abgestützt ist. Die beiden vertikalen Profilseiten des Rahmengestells können sich an gegenüberliegenden Längskanten der horizontalen Befestigungsseite 26 des Rahmengestells unter einem 90° Winkel anschließen, mithin von der horizontalen Befestigungsseite 26 abgekantet sein. Dabei kann der Haken 27 in eine Systemlochung 28 in der horizontalen Befestigungsseite 26 des Profilrahmens eingreifen (vergleiche Figur 6).

Der Befestigungswinkel 7 weist eine erste und eine zweite Zapfenaufnahme 14 auf, die jeweils eine Anlaufschräge aufweisen, um das Einführen eines Zapfens 13 (siehe Figur 4) im Zuge einer Kippbewegung der Montageplatte zu erleichtern. Der Zapfen 13 des Lagerstücks 5 kann dabei in einer ersten Zapfenaufnahme 14 aufgenommen sein, wenn der Befestigungswinkel 7 an einer Tiefenstrebe eines horizontalen Bodenrahmens des Rahmengestells montiert ist. Weiterhin kann der Zapfen des Lagerstücks in der zweiten Zapfenaufnahme 14 aufgenommen sein, wenn der Befestigungswinkel beispielsweise an einer breiten Strebe eines Bodenrahmens des Rahmengestells montiert ist. Der Montageabschnitt 25 weist weiterhin Bolzendurchlässe 42 auf, um den Befestigungswinkel 7 an dem Bodenrahmen eines Rahmengestells zu verschrauben.

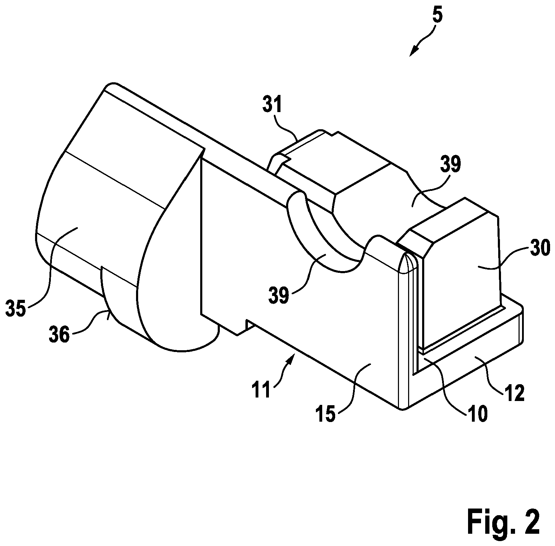

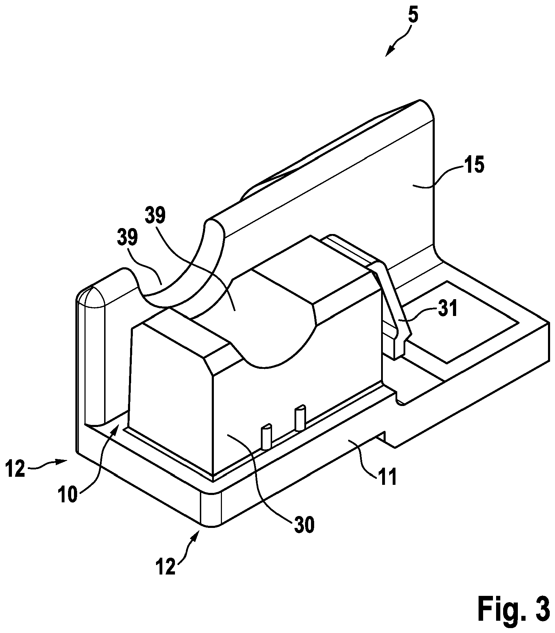

In den Figuren 2 und 3 ist eine beispielhafte Ausführungsform eines Lagerstücks 5 gezeigt. Das Lagerstück 5 kann beispielsweise ein Kunststoffteil sein und somit gegenüber dem in Figur 1 gezeigten Befestigungswinkel 7 ein geringeres Elastizitätsmodul aufweisen, so dass das Lagerstück 5, wenn es auf dem Befestigungswinkel 7 gemäß Figur 1 aufgesetzt ist, dazu eingerichtet ist, Schwingungen aufzunehmen und somit die mechanische Beanspruchung des aus den Figuren 1 und 2 gezeigten Bauteilen gebildeten Montageplattenhalters zu verringern. Das Lagerstück 5 gemäß den Figuren 2 und 3 kann insbesondere ein Spritzgußformteil sein. Das Lagerstück 5 besteht aus einem thermoplastischen Kunststoff, z.B. aus Polyamid.

Das Lagerstück 5 weist eine Aufstandsseite 11 auf, über die das Lagerstück 5 auf dem Befestigungswinkel 7 (siehe Figur 1) aufsteht. In der Zusammenschau der Figuren 2 bis 4 ist zu erkennen, dass an einer Unterseite der Aufstandsseite 11 ein Zapfen 13 angeordnet sein kann, über den das Lagerstück 5 in eine der Zapfenaufnahmen 14 des Befestigungswinkels 7 eingreifen kann. Insbesondere kann das Lagerstück 5 über seine Aufstandsseite 11 vertikale Schwingungen der Montageplatte dämpfen, da zumindest die Aufstandsseite 11 des Lagerstücks 5 aus einem Material bestehen kann, das ein Elastizitätsmodul aufweist, das geringer als das Elastizitätsmodul des Materials des Befestigungswinkels 7 (siehe Figur 1) ist. Um Schwingungen senkrecht dazu aufzunehmen, das heißt, Schwingungen senkrecht zu der Stützwand 15, ist auch die Stützwand 15 aus einem Material gefertigt, beispielsweise aus demselben Kunststoff wie die Aufstandsseite 11, welches ein Elastizitätsmodul aufweist, das geringer als ein Elastizitätsmodul des Materials des Befestigungswinkels 7 ist. Mithin bilden somit bei der in den Figuren 2 und 3 gezeigten Ausführungsform die Stützwand 15 und die Aufstandsseite 11 das Dämpfungsglied 12.

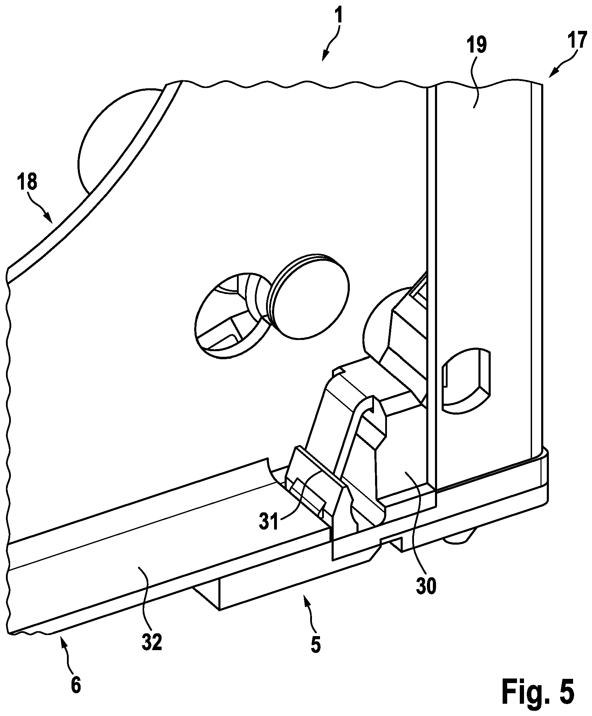

Das Lagerstück 5 weist ein Passstück 30 auf, über das das Lagerstück 5 über eine untere Längskante 6 einer Montageplatte 1 (siehe Figur 5) in einer Ausnehmung an der unteren Längskante 6 der Montageplatte 1 eingesetzt und mit der Montageplatte verbunden werden kann. Dazu weist das Passstück 30 eine Rastklinke 31 auf, die, wie in den Figuren 4 und 5 gezeigt ist, bei über das Passstück in die Montageplatte eingesetztem Lagerstück 5 eine L-Kantung 32 an der unteren Längskante 6 der Montageplatte 1 hintergreift. Das Passstück 30 ist insbesondere dazu eingerichtet, im Bereich einer C- oder U-Umkantung der Montageplatte 1 formschlüssig über die untere Längskante 6 der Montageplatte 1 in die Montageplatte 1 eingesetzt zu werden und damit das Lagerstück 5 in Bezug auf die Montageplatte 1 festzulegen. Das Passstück 30 sowie die Stützwand 15 weisen an ihren freien Enden jeweils eine Ausnehmung 39 auf, welche einen Bolzendurchlass bilden, wie es in der Zusammenschau mit den Figuren 4 und 6 deutlich wird.

Bei der in Figur 4 gezeigten Montageplattenanordnung ist die Montageplatte 1 über den Montageplattenhalter 2 an einer Bodenbaugruppe bestehend aus einem Bodenrahmen 20 und einem Zusatzrahmen 21 festgelegt, wie sie in der DE 10 2015 121 192 A1 beschrieben ist. Auf die geometrischen Einzelheiten der Bodenbaugruppe soll daher vorliegend nicht weiter eingegangen werden. Die Bodenbaugruppe zeichnet sich mit Bezug auf die vorliegende Erfindung insbesondere dadurch aus, dass der Zusatzrahmen 21 eine horizontale Auflageseite 22 am Innenumfang des Bodenrahmens 20 bereitstellt, auf der der Befestigungswinkel 7 über sein Fußteil 23 aufsteht und somit der Montageplattenhalter 2 die vertikalen Belastungen aufnimmt. Horizontale Kräfte werden über den Montageabschnitt 25 abgefangen, welcher eine horizontale Befestigungsseite 26 des Bodenrahmens 20 umgreift beziehungsweise hintergreift.

Der Befestigungswinkel 7 bei der Ausführungsform gemäß Figur 4 kann beispielsweise entsprechend der Ausführungsform gemäß Figur 1 ausgebildet sein. Wie es in Figur 6 gezeigt ist, kann der Befestigungswinkel 7 über einen Bolzen 29 mit der Befestigungsseite 26 des Bodenrahmens 20 verschraubt sein. Die Gegenstützwand 16 weist in ihrer von der Montageplatte 1 abgewandten Außenseite eine Käfigmutter 33 auf, in welche ein Bolzen 34 über die Montageseite 18 der Montageplatte 1 und durch die dazu parallel beabstandet angeordnete weitere Profilseite 19 der C-Umkantung 17 der Montageplatte 1 und durch die Gegenstützwand 16 hindurch eingeschraubt ist. Das Lagerstück 5 ist über sein Dämpfungsglied 12 auf dein Befestigungswinkel 7 aufgesetzt. In der Zusammenschau der Figuren 4 und 6 ist zu erkennen, dass das Lagerstück 5 mit der Montageplatte 1 und mit dem Erreichen des Befestigungswinkels 7 aus einer angewinkelten Stellung in die Vertikale gebracht werden kann und dabei der Zapfen 13 (siehe Figur 4) an der Unterseite der Aufstandsseite 11 des Lagerstücks 5 in die Zapfenaufnahme 14 des Befestigungswinkels 7 (siehe Figur 1) eingesetzt werden kann. Um die Verlagerung der gekippten Montageplatte entlang der Gleitschiene 37 zu führen, weist das Lagerstück 5, insbesondere die Kontur 35 des Lagerstücks 5, einen Absatz auf, der eine Führungsfläche 36 aufweist, die an einer vertikalen Außenkante der Gleitschiene 37 geführt ist.

Wie in Figur 6 gezeigt ist, ist die Umkantung 17 der Montageplatte 1 in der Montageposition zwischen der Gegenstützwand 16 des Befestigungswinkels 7 und der Stützwand 15 des Lagerstücks 5 aufgenommen, wobei die Montageplatte 1 über einen Bolzen 34 durch die Montageebene 18 hindurch und über die Profilseite 19 mit der Gegenstützwand 16 verschraubt ist (vergleiche auch Figur 4). In der in Figur 6 gezeigten Montageposition ist die Montageplatte 1 in Vertikalrichtung über die Aufstandsseite 11, die aus einem Kunststoffmaterial bestehen kann, über den Befestigungswinkel 7 und damit dem Bodenrahmen 20 gegenüber Stößen und Vibrationen gedämpft, wobei über die Stützwand 15, die ebenso wie die Aufstandsseite 11 aus einem Material mit einem geringeren Elastizitätsmodul als das Material des Befestigungsmittels 7 ausgebildet sein kann, die Montageplatte 1 in der Horizontalebene schwingungsgedämpft ist. Mithin bilden somit die Stützwand 15 sowie die Aufstandsseite 11 bei der in Figur 6 gezeigten Ausführungsform das Dämpfungsglied 12 im Sinne der vorliegenden Erfindung. Es konnte gezeigt werden, dass Montageplattenhalter mit einem Dämpfungsglied wesentlich verschleißunanfälliger sind und hohen Vibrationsbelastungen Stand halten.

Figur 5 zeigt eine Detailansicht einer Montageplatte 1 im Bereich der Umkantung 17, die vorliegend als eine C-Umkantung beziehungsweise eine U-Umkantung ausgebildet ist, und eine vertikale Berandung der Montageplatte 1 bildet. An der unteren, horizontalen Längskante 6 weist die Montageplatte 1 eine L-Umkantung 32 auf. Die L-Umkantung 32 ist im Randbereich, das heißt im Bereich der C- beziehungsweise U-Umkantung 17 ausgespart, so dass eine Aufnahme für das Passstück 30 des Lagerstücks 5 gebildet ist. In der in Figur 5 gezeigten eingesetzten Position des Lagerstücks 5 hintergreift eine Rastklinke 31 die L-Umkantung und legt somit das Lagerstück 5 an der Montageplatte 1 fest.

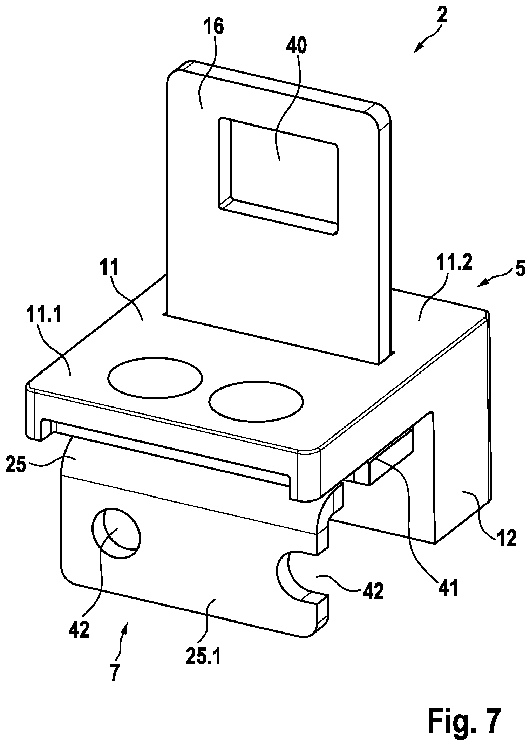

Figur 7 zeigt ein Beispiel eines Montageplattenhalters 2, der aus einem Befestigungswinkel 7 sowie einem Lagerstück 5 besteht, wobei das Lagerstück 5 einen sich senkrecht durch die Aufstandsseite 11 des Lagerstücks 5 erstreckenden Durchbruch aufweist, durch welchen der Befestigungswinkel 7 mit seiner Gegenstützwand 16 hindurchragt. Der Befestigungswinkel 7 liegt mit seiner weiteren Aufstandsseite 41 an der Unterseite der Aufstandsseite 11 des Lagerstücks 5 an. Der Befestigungswinkel 7 weist einen vertikalen Abschnitt 25.1. auf, welcher sich senkrecht zu der weiteren Aufstandsseite erstreckt, und mit welchem der Montageplattenhalter 2 analog zu dem in Figur 1 gezeigten Befestigungswinkel 7 eine Profilseite eines Rahmengestells umgreifen kann, um eine Montageplatte mit Hilfe des Montageplattenhalters 2 an dem Rahmengestell festzulegen.

Das Lagerstück 5 ist im Wesentlichen als ein Dämpfungsglied 12 ausgebildet, welches beispielsweise aus einem thermoplastischen Kunststoff gefertigt sein kann, insbesondere aus einem Polyamid. Die Aufstandsseite 11 des Dämpfungsglieds 12 ist zweigeteilt und weist einen ersten Abschnitt 11.1 auf, welcher sich senkrecht zu einer Vorderseite der Gegenstützwand 16 erstreckt und der einen zweiten Abschnitt 11.2 aufweist, welcher sich senkrecht zu einer der Vorderseite gegenüberliegenden Rückseite der Gegenstützwand 16 erstreckt.

In einer ersten Montageposition kann eine Montageplatte mit ihrer Profilseite 19 (vgl. Figur 5) an der Vorderseite der Gegenstützwand 16 festgelegt werden und dazu auf dem ersten Abschnitt 11.1 der Aufstandsseite 11 aufstehen. In einer zweiten Montageposition kann eine Montageplatte mit ihrer Montageebene an der Rückseite der Gegenstützwand 16 anliegen und dabei auf dem zweiten Abschnitt 11.2 der Aufstandsseite 11 anliegen. Der in Figur 7 gezeigte Montageplattenhalter ist somit dazu geeignet, die Montageplatte in Bezug auf das Rahmengestell in zwei unterschiedlichen Montagepositionen festzulegen. Der in Figur 7 gezeigte Montageplattenhalter 2 ermöglicht es insbesondere, dass die Montageplatte mit dem an der Unterkante der Montageplatte vormontierten Montageplattenhalter 2 von einer Außenseite, insbesondere einer Rückseite des Schaltschranks in das Rahmengestell gesetzt und eingeschwenkt wird. Analog zu den zuvor beschriebenen Ausführungsformen weist die Gegenstützwand 16 eine Aufnahme 40 für eine Käfigmutter oder Einsteckmutter auf.

Die in der vorstehenden Beschreibung, in den Zeichnungen sowie in den Ansprüchen offenbarte Merkmale der Erfindung können sowohl einzeln als auch in beliebiger Kombination für die Verwirklichung der Erfindung wesentlich sein.

### Bezugszeichenliste

- 1: Montageplatte
- 2: Montageplattenhalter
- 3: Rahmengestell
- 4: Schaltschrank
- 5: Lagerstück
- 6: untere Längskante
- 7: Befestigungswinkel
- 8: Tiefenstrebe
- 9: Breitenstrebe
- 10: Aufnahme
- 11: Aufstandsseite
- 12: Dämpfungsglied
- 13: Zapfen
- 14: Zapfenaufnahme
- 15: Stützwand
- 16: Gegenstützwand
- 17: Umkantung
- 18: Montageebene
- 19: Profilseite
- 20: Bodenrahmen
- 21: Zusatzrahmen
- 22: Auflageseite
- 23: Fußteil
- 24: Stützabschnitt
- 25: Montageabschnitt
- 25.1: vertikaler Abschnitt
- 26: Befestigungsseite
- 27: Haken
- 28: Befestigungsaufnahme
- 29: Schraube
- 30: Passstück
- 31: Rastklinke
- 32: L-Kantung
- 33: Käfigmutter
- 34: Bolzen
- 35: Kontur
- 36: Führungsfläche
- 37: Gleitschiene
- 38: äußere Dichtebene
- 39: Ausnehmung
- 40: Aufnahme für Käfigmutter
- 41: weitere Aufstandsseite
- 42: Bolzendurchlass

## Patentansprüche

1. Schaltschrank mit einem Rahmengestell und einer Montageplattenanordnung mit einer Montageplatte (1), die über mindestens einen Montageplattenhalter (2) am Rahmengestell (3) des Schaltschranks (4) festgelegt ist, wobei der Montageplattenhalter (2) ein Lagerstück (5) aufweist, das an einer unteren Längskante (6) der Montageplatte (1) anliegt oder festgelegt ist, wobei die Montageplatte (1) mit dem Lagerstück (5) über einen Befestigungswinkel (7) des Montageplattenhalters (2) auf einer Horizontalstrebe (8) des Rahmengestells (3) aufsteht, wobei zumindest eine Aufstandsseite (11) des Lagerstücks (5), über die das Lagerstück (5) auf dem Befestigungswinkel (7) aufsteht, ein Dämpfungsglied (12) ist oder aufweist, das eine Stützwand (15) aufweist, die sich parallel zu einer Gegenstützwand (16) des Befestigungswinkels (7) und senkrecht zu der Aufstandsseite (11) erstreckt, **dadurch gekennzeichnet, dass** eine C-Umkantung oder eine U-Umkantung (17) am Außenumfang der Montageplatte (1) zwischen der Stützwand (15) und der Gegenstützwand (16) gehalten ist, wobei die Montageplatte (1) mit ihrer Montageebene (18) für Innenausbaukomponenten an einer ersten von Stützwand (15) und Gegenstützwand (16) anliegt, und wobei die Montageplatte (1) mit einer parallel beabstandet zu der Montageebene (18) angeordneten Profilseite (19) an einer zweiten von Stützwand (15) und Gegenstützwand (16) anliegt

2. Schaltschrank nach Anspruch 1, bei dem das Lagerstück (5) eine Aufnahme (10) aufweist, in der die untere Längskante (6) der Montageplatte (1) aufgenommen ist.

3. Schaltschrank nach Anspruch 1, bei dem das Lagerstück (5) einen Zapfen (13) aufweist, der sich in eine Zapfenaufnahme (14) des Befestigungswinkels (7) erstreckt.

4. Schaltschrank nach einem der vorangegangenen Ansprüche, bei dem das Dämpfungsglied (12) des Lagerstücks (5) ein Material aufweist oder aus einem solchen besteht, das ein Elastizitätsmodul aufweist, das geringer als ein Elastizitätsmodul des Materials des Rahmengestells (3) und geringer als eine Elastizitätsmodul des Materials des Befestigungswinkels (7) ist.

5. Schaltschrank nach Anspruch 1, bei dem das Dämpfungsglied (12) des Lagerstücks (5) aus Kunststoff besteht und der Befestigungswinkel (7) ein Metallteil ist.

6. Schaltschrank nach Anspruch 1, bei dem die Montageplatte (1) über die Umkantung (17), insbesondere über eine parallel beabstandet zu der Montageebene (18) der Montageplatte (1) angeordnete Profilseite (19) der Umkantung (17) an der Gegenstützwand (16) des Befestigungswinkels (7) festgelegt, insbesondere verschraubt ist.

7. Schaltschrank nach einem der vorangegangenen Ansprüche, bei dem das Rahmengestell (3) einen rechteckigen Bodenrahmen (20) aus zwei Breitenstreben und zwei sich dazu senkrecht erstreckenden Tiefenstreben (8) aufweist, wobei der Bodenrahmen (20) auf einen Zusatzrahmen (21) aufgesetzt ist, der eine horizontale Auflageseite (22) am Innenumfang des Bodenrahmen (20) bereitstellt, und wobei der Befestigungswinkel (7) ein Fußteil (23) aufweist, mit dem der Befestigungswinkel (7) auf der Auflageseite (22) aufsteht.

8. Schaltschrank nach Anspruch 7, bei dem das Fußteil (23) einen Stützabschnitt (24) aufweist, über den der Befestigungswinkel (7) an einer vertikalen Profilseite (19) am Innenumfang des Bodenrahmens (20) abgestützt ist.

9. Schaltschrank nach einem der vorangegangenen Ansprüche, bei dem der Befestigungswinkel (7) einen Montageabschnitt (25) aufweist, mit dem der Befestigungswinkel (7) eine horizontale Befestigungsseite (26) des Rahmengestells (3) übergreift.

10. Schaltschrank nach Anspruch 9, bei dem der Befestigungswinkel (7) über den Montageabschnitt (25) an dem Rahmengestell (3) festgelegt, insbesondere verschraubt ist.

11. Schaltschrank nach Anspruch 9 oder 10, bei dem der Montageabschnitt (25) einen Haken (27) aufweist, über den der Befestigungswinkel (7) in eine Befestigungsaufnahme (28) einer Systemlochung in einer horizontalen Befestigungsseite (26) eines horizontalen Bodenrahmens (20) des Rahmengestells (3) eingreift.

12. Schaltschrank nach einem der vorangegangenen Ansprüche, bei dem der Befestigungswinkel (7) eine erste und eine zweite Zapfenaufnahme (14) aufweist, wobei ein Zapfen (13) des Lagerstücks (5) in der ersten Zapfenaufnahme (14) aufgenommen ist, wenn der Befestigungswinkel (7) an einer Tiefenstrebe (8) eines horizontalen Bodenrahmen (20) des Rahmengestells (3) montiert ist, und wobei der Zapfen (13) des Lagerstücks (5) in der zweiten Zapfenaufnahme (14) aufgenommen ist, wenn der Befestigungswinkel (7) an einer Breitenstrebe eines Bodenrahmen (20) des Rahmengestells (3) montiert ist.

13. Schaltschrank nach einem der vorangegangenen Ansprüche, bei dem eine horizontale und/oder eine vertikale Befestigungsseite (26) einer Tiefenstrebe (8) des Rahmengestells (3) eine Systemlochung aus unter einem festen Rastermaß angeordneten Befestigungsaufnahmen (28) aufweist, wobei eine vertikale Montageebene (18) der Montageplatte (1) in dem Rastermaß angeordnet ist.

## Claims

1. Switch cabinet with a frame and a mounting plate arrangement having a mounting plate (1) which is fixed to the frame (3) of the switch cabinet (4) via at least one mounting plate holder (2), the mounting plate holder (2) having a bearing piece (5) which bears against or is fixed to a lower longitudinal edge (6) of the mounting plate (1), the mounting plate (1) with the bearing piece (5) resting on a horizontal strut (8) of the frame (3) via a mounting bracket (7) of the mounting plate holder (2), wherein at least a contact side (11) of the bearing piece (5), via which the bearing piece (5) rests on the mounting bracket (7), is or comprises a damping element (12), wherein the damping element (12) comprises a support wall (15) extending parallel to a counter support wall (16) of the mounting bracket (7) and perpendicular to the contact side (11), **characterized in that** a C-edging (17) or an U-edging (17) on the outer perimeter of the mounting plate (1) is held between the support wall (15) and the counter support wall (16), wherein the mounting plate (1) bears with its mounting plane (18) for interior components against a first of support wall (15) and counter support wall (16), and wherein the mounting plate (1) bears with a profile side (19) arranged parallel spaced apart from the mounting plane (18) against a second of support wall (15) and counter support wall (16).

2. The switch cabinet according to claim 1, in which the bearing piece (5) has a receptacle (10) in which the lower longitudinal edge (6) of the mounting plate (1) is accommodated.

3. The switch cabinet according to claim 1, in which the bearing member (5) has a pin (13) extending into a pin receptacle (14) of the mounting bracket (7).

4. The switch cabinet according to any of the preceding claims, in which the damping element (12) of the bearing piece (5) comprises or consists of a material having a modulus of elasticity which is less than a modulus of elasticity of the material of the frame (3) and less than a modulus of elasticity of the material of the mounting bracket (7).

5. The switch cabinet according to claim 1, in which the damping element (12) of the bearing piece (5) consists of plastic and the mounting bracket (7) is a metal part.

6. The switch cabinet according to claim 1, in which the mounting plate (1) is fixed, in particular screwed, to the counter support wall (16) of the mounting bracket (7) via the edging (17), in particular via a profile side (19) of the edging (17) arranged parallel spaced apart from the mounting plane (18) of the mounting plate (1).

7. The switch cabinet according to any of the preceding claims, in which the frame (3) has a rectangular floor frame (20) comprising two width struts (9) and two depth struts (8) extending perpendicularly thereto, the floor frame (20) being placed on an additional frame (21) which provides a horizontal support side (22) on the inner perimeter of the floor frame (20), and the mounting bracket (7) having a foot portion (23) with which the mounting bracket (7) rests on the support side (22).

8. The switch cabinet according to claim 7, in which the foot portion (23) has a support section (24) via which the mounting bracket (7) is supported onto a vertical profile side (19) on the inner perimeter of the floor frame (20).

9. The switch cabinet according to any of the preceding claims, in which the mounting bracket (7) has a mounting section (25) with which the mounting bracket (7) engages across a horizontal fastening side (26) of the frame (3).

10. The switch cabinet according to claim 9, in which the mounting bracket (7) is fixed, in particular screwed, to the frame (3) via the mounting section (25).

11. The switch cabinet according to claim 9 or 10, in which the mounting section (25) has a hook (27) via which the mounting bracket (7) engages in a fastening receptacle (28) of a system perforation in a horizontal fastening side (26) of a horizontal floor frame (20) of the frame (3).

12. The switch cabinet according to any of the preceding claims, in which the mounting bracket (7) comprises a first and a second pin receptacle (14), a pin (13) of the bearing piece (5) being received in the first pin receptacle (14) when the mounting bracket (7) is mounted on a depth strut (8) of a horizontal floor frame (20) of the frame (3), and wherein the pin (13) of the bearing piece (5) is received in the second pin receptacle (14) when the mounting bracket (7) is mounted on a width strut (9) of a floor frame (20) of the frame (3).

13. The switch cabinet according to any of the preceding claims, in which a horizontal and/or a vertical fastening side (26) of a depth strut (8) of the frame (3) has a system perforation of fastening receptacles (28) arranged under a fixed grid dimension, a vertical mounting plane (18) of the mounting plate (1) being arranged in the grid dimension.

## Revendications

1. Armoire de distribution, avec un châssis et un ensemble de plaque de montage avec une plaque de montage (1) qui est immobilisée sur le châssis (3) de l'armoire de distribution (4) par le biais d'au moins un support de plaque de montage (2), le support de plaque de montage (2) comportant un élément de palier (5) qui est adjacent à une arête longitudinale (6) inférieure de la plaque de montage (1) ou immobilisée sur cette arête, la plaque de montage (1) reposant avec l'élément de palier (5), par le biais d'une cornière de fixation (7) du support de plaque de montage (2), sur une entretoise horizontale (8) du châssis (3), au moins un côté de support (11) de l'élément de palier (5) par le biais duquel l'élément de palier (5) repose sur la cornière de fixation (7), étant ou comportant un organe d'amortissement (12) qui comporte une cloison d'appui (15) qui s'étend parallèlement à une contre-cloison d'appui (16) de la cornière de fixation (7) et perpendiculairement au côté de support (11), **caractérisée en ce qu'**un rebord en C ou un rebord en U (17) est retenu sur la circonférence extérieure de la plaque de montage (1) entre la cloison d'appui (15) et la contre-cloison d'appui (16), la plaque de montage (1) étant, avec son plan de montage (18) pour des composants d'aménagement intérieur, adjacente à une première cloison parmi la cloison d'appui (15) et la contre-cloison d'appui (16), et la plaque de montage (1) étant, avec un côté profilé (19) disposé parallèlement au plan de montage (18) et à distance de celui-ci, adjacente à une deuxième cloison parmi la cloison d'appui (15) et la contre-cloison d'appui (16).

2. Armoire de distribution selon la revendication 1, dans laquelle l'élément de palier (5) comporte un logement (10) dans lequel est logée l'arête longitudinale (6) inférieure de la plaque de montage (1).

3. Armoire de distribution selon la revendication 1, dans laquelle l'élément de palier (5) comporte un tourillon (13) qui s'étend dans un logement de tourillon (14) de la cornière de fixation (7).

4. Armoire de distribution selon l'une des revendications précédentes, dans laquelle l'organe d'amortissement (12) de l'élément de palier (5) comporte un matériau ou se compose d'un tel matériau qui présente un module d'élasticité qui est inférieur à un module d'élasticité du matériau du châssis (3) et inférieur à un module d'élasticité du matériau de la cornière de fixation (7).

5. Armoire de distribution selon la revendication 1, dans laquelle l'organe d'amortissement (12) de l'élément de palier (5) se compose de matière plastique, et la cornière de fixation (7) est une pièce métallique.

6. Armoire de distribution selon la revendication 1, dans laquelle la plaque de montage (1) est. par le biais du rebord (17), immobilisée, en particulier vissée, sur la contre-cloison d'appui (16) de la cornière de fixation (7), en particulier par le biais d'un côté profilé (19) du rebord (17) disposé parallèlement et à distance du plan de montage (18) de la plaque de montage (1).

7. Armoire de distribution selon l'une des revendications précédentes, dans laquelle le châssis (3) comporte un cadre de plancher (20) rectangulaire composé de deux entretoises de largeur et deux entretoises de profondeur (8) qui s'étendent perpendiculairement à celles-ci, le cadre de plancher (20) étant posé sur un cadre supplémentaire (21) qui fournit un côté d'appui (22) horizontal sur la circonférence intérieure du cadre de plancher (20), et la cornière de fixation (7) comportant une partie de pied (23) avec laquelle la cornière de fixation (7) repose sur le côté d'appui (22).

8. Armoire de distribution selon la revendication 7, dans laquelle la partie de pied (23) comporte un tronçon d'appui (24) par le biais duquel la cornière de fixation (7) s'appuie sur un côté profilé (19) vertical sur la circonférence intérieure du cadre de plancher (20).

9. Frein à disque selon l'une des revendications précédentes, dans lequel la cornière de fixation (7) comporte un tronçon de montage (25) avec lequel la cornière de fixation (7) enjambe un côté de fixation (26) horizontal du châssis (3).

10. Armoire de distribution selon la revendication 9, dans laquelle la cornière de fixation (7) est immobilisée, en particulier vissée, sur le châssis (3) par le biais du tronçon de montage (25).

11. Armoire de distribution selon la revendication 9 ou 10, dans laquelle le tronçon de montage (25) comporte un crochet (27) par le biais duquel la cornière de fixation (7) engrène dans un logement de fixation (28) d'une perforation du système dans un côté de fixation (26) horizontal d'un cadre de plancher (20) horizontal du châssis (3).

12. Armoire de distribution selon l'une des revendications précédentes, dans laquelle la cornière de fixation (7) comporte un premier et un deuxième logement de tourillon (14), un tourillon (13) de l'élément de palier (5) étant logé dans le premier logement de tourillon (14) quand la cornière de fixation (7) est montée sur une entretoise de profondeur (8) d'un cadre de plancher (20) horizontal du châssis (3), et le tourillon (13) de l'élément de palier (5) étant logé dans le deuxième logement de tourillon (14) quand la cornière de fixation (7) est montée sur une entretoise de largeur d'un cadre de plancher (20) du châssis (3).

13. Armoire de distribution selon l'une des revendications précédentes, dans laquelle un côté de fixation (26) horizontal et/ou un côté de fixation (26) vertical d'une entretoise de profondeur (8) du châssis (3) comporte une perforation du système composée de logements de fixation (28) disposé au-dessous d'une dimension modulaire fixe, un plan de montage (18) vertical de la plaque de montage (1) étant disposé dans la dimension modulaire.
